# EUROPÄISCHE PATENTSCHRIFT

(11) **EP 2 872 258 B1**
(45) Veröffentlichungstag und Bekanntmachung des Hinweises auf die Patenterteilung: **25.05.2016**
(21) Anmeldenummer: 13737539.0
(22) Anmeldetag: 11.07.2013
(51) Int. Cl.: B05B 7/14, B05B 7/16, C23C 24/04

(54) **KALTGASSPRITZPISTOLE MIT PULVERINJEKTOR**
COLD GAS SPRAY GUN WITH POWDER INJECTOR
PISTOLET DE PROJECTION À GAZ FROID AVEC INJECTEUR DE POUDRE

(30) Priorität: 12.07.2012 DE 102012013815
(43) Veröffentlichungstag der Anmeldung: 20.05.2015
(73) Patentinhaber: Impact Innovations GmbH, 84431 Haun (DE)
(72) Erfinder: RICHTER, Peter, jun., 84431 Heldenstein (DE); HOLZGASSNER, Leonhard, 84437 Reichertsheim (DE); GROPP, Andreas, 84427 St. Wolfgang (DE); RICHTER, Peter, sen., 84431 Heldenstein (DE)
(74) Vertreter: Bauer, Friedrich
(86) Internationale Anmeldenummer: PCT/EP2013/002062
(87) Internationale Veröffentlichungsnummer: WO 2014/009018

(56) Entgegenhaltungen:
- WO-A1-2007/110134
- JP-A- 2001 310 142

## Beschreibung

Die vorliegende Erfindung betrifft eine Kaltgasspritzpistole mit einem Pulverinjektor nach dem Oberbegriff des Anspruchs 1.

Beim Kaltgasspritzen handelt es sich um ein Beschichtungsverfahren, bei dem der Beschichtungswerkstoff in Pulverform vorliegt und mit sehr hohen Geschwindigkeiten auf ein Trägermaterial, ein Substrat oder ein Bauteil aufgebracht wird. Die Pulverpartikel des in Pulverform vorliegenden Beschichtungswerkstoffs weisen üblicherweise Partikeldurchmesser von 1 *µ*m bis 250 *µ*m auf. Die Pulverpartikel werden in einem Gasstrom auf Geschwindigkeiten von 200 m/s bis 1600 m/s beschleunigt, indem die Pulverpartikel in eine zwischen einer Düse und einem Hochdruckgaserhitzer angeordnete Mischkammer injiziert werden, wobei aus dem Hochdruckgaserhitzer das Prozessgas mit einer hohen Geschwindigkeit in die Mischkammer strömt, so dass die in die Mischkammer injizierten Pulverpartikel durch den Gasstrom beschleunigt und aufgeheizt werden. Beim Aufprall der Pulverpartikel auf dem Substrat steigt durch plastische Verformung der Pulverpartikel deren Temperatur so weit an, dass an der Grenzfläche des Substrats die Pulverpartikel durch Verschweißung an dem Substrat anhaften.

Aus der WO 2007/110134 A1 ist eine Kaltgasspritzpistole bekannt, bei der in eine zwischen einem Druckbehälter und einer Düse angeordneten Mischkammer die Pulverpartikel mittels eines Partikelrohrs injiziert werden. Das Partikelrohr umfasst dabei eine Zuführöffnung zum Zuführen eines Gas-Pulver-Gemisches in das Partikelrohr und eine Ausgabeöffnung zum Ausgeben des Gas-Pulver-Gemisches aus dem Pulverinjektor in die Mischkammer. Das in die Mischkammer hineinragende Ende des Partikelrohres weist eine L-förmige Biegung auf, und die Ausgabeöffnung ist eine stirnseitige Öffnung des Partikelrohres, aus der die Pulverpartikel ausgegeben werden.

Nachteilig bei dieser Lösung ist, dass die aus der Ausgabeöffnung austretenden Pulverpartikel eine große Streuung aufweisen, so dass das Partikelrohr im Bereich der Ausgabeöffnung einem hohen abrasivem Verschleiß unterliegt. Darüber hinaus ist die Positionierung des Partikelrohrs und somit die Ausströmrichtung der Pulverpartikel aus dem Partikelrohr nicht einstellbar, so dass eine erhöhe Abrasion sowohl der Ausgabeöffnung des Partikelrohrs als auch des Düseneingangsbereichs vorliegt.

Der vorliegenden Erfindung liegt die Aufgabe zugrunde, eine Kaltgasspritzpistole mit einem verbesserten Pulverinjektor bereitzustellen, der einem verminderten abrasiven Verschleiß unterliegt und der eine verminderte Abrasion des Düseneingangsbereichs zur Folge hat.

Diese Aufgabe wird durch eine Kaltgasspritzpistole mit den Merkmalen des Ansprucha 1 gelöst. Vorteilhafte Ausführungen sind in den Unteransprüchen beschrieben.

Bei der erfindungsgemäßen Kaltgasspritzpistole ist das Pulverinjektorrohr an einem stirnseitigen Ende verschlossen, und die Ausgabeöffnung ist als Öffnung in einer Seitenwand des Pulverinjektorrohrs ausgebildet. Die Ausgabeöffnung mündet in den Hohlraum des Pulverinjektorrohrs im axialen Abstand zum verschlossenen stirnseitigen Ende des Pulverinjektorrohrs, so dass zwischen der Ausgabeöffnung und dem verschlossenen stirnseitigen Ende des Pulverinjektorrohrs ein Stauvolumen gebildet ist.

Aufgrund des zwischen dem verschlossenen stirnseitigen Ende des Pulverinjektorrohrs und der Ausgabeöffnung befindlichen Stauvolumens tritt das Gas-Pulver-Gemisch senkrecht aus dem Pulverinjektorrohr mit einer sehr verminderten Streuung aus, so dass die Ausgabeöffnung des Pulverinjektorrohrs einem verminderten abrasiven Verschleiß unterliegt. Da die Pulverteilchen aufgrund der Bereitstellung des Stauvolumens eine sehr kleine Streuung aufweisen, treffen weniger Pulverpartikel auf die Innenwandung im Düseneingangsbereich, so dass auch der Düseneingangsbereich einem verminderten abrasiven Verschleiß unterliegt.

Der axiale Abstand zwischen dem stirnseitigen Ende des Pulverinjektorrohrs und der Ausgabeöffnung, also die axiale Länge des Stauvolumens beträgt vorzugsweise zwischen 1 mm und 20 mm, weiter vorzugsweise zwischen 2 mm und 15 mm und weiter vorzugsweise zwischen 4 mm und 12 mm. Der Durchmesser des Pulverinjektorrohrs im Bereich des Stauvolumens beträgt vorzugsweise zwischen 1 mm und 20 mm, weiter vorzugsweise zwischen 4 mm und 15 mm und weiter vorzugsweise zwischen 6 mm und 12 mm.

Vorzugsweise schließt eine Ausgabeöffnungsachse der Ausgabeöffnung mit einer Längsachse des Pulverinjektorrohrs einen Winkel zwischen 60° und 120°, insbesondere 90° ein.

Dadurch kann die Ausströmrichtung des Gas-Pulver-Gemisches aus dem Pulverinjektorrohr beeinflusst werden.

Vorzugsweise umfasst der Pulverinjektor ferner ein an dessen Außenseite angeordnetes Befestigungselement mit einem kreissymmetrischen Querschnitt, mittels dem und/oder über den der Pulverinjektor an der Kaltgasspritzpistole befestigbar ist. Ferner umfasst der Pulverinjektor einen der Zuführöffnung gegenüberstehenden Führungs- und/oder Anschlagabschnitt. Dabei ist eine Längsachse des Befestigungselements exzentrisch zu einer Längsachse des Führungs- und/oder Anschlagabschnitts ausgerichtet.

Das Befestigungselement ist beispielsweise in einer zur Außenseite hin offenen ersten radialen Ausnehmung mit kreissymmetrischen Querschnitt aufnehmbar. Der Führungs- und/oder Anschlagabschnitt ist in einer zum Innenraum der Mischkammer hin offenen zweiten radialen Ausnehmung der Mischkammer einführbar. Die Längsachsen der ersten und zweiten radialen Ausnehmungen der Mischkammer sind ebenfalls exzentrisch zueinander ausgerichtet, so dass der Pulverinjektor in lediglich einer einzigen Winkelstellung so in die Mischkammer einführbar ist, dass das Befestigungselement in der ersten radialen Ausnehmung und der Führungs- und/oder Anschlagabschnitt gleichzeitig in der zweiten radialen Ausnehmung der Mischkammer aufgenommen ist.

Somit kann ein entsprechend ausgebildeter Pulverinjektor sehr genau in der Kaltgasspritzpistole bzw. in der Mischkammer der Kaltgasspritzpistole positioniert werden. Aufgrund der genauen Positionierung der Ausgabeöffnung entlang der Längsachse der Mischkammer und somit in das Zentrum des Heizgasstroms unterliegt die Ausgabeöffnung einem weiter verminderten Verschleiß. Weiterhin wird das Gas-Pulver-Gemisch sehr genau in die Öffnung der der Mischkammer nachgelagerten Düse abgegeben, so dass auch der Eingangsbereich der Düse einem verminderten Verschleiß unterworfen ist.

Weitere Vorteile, Einzelheiten und Merkmale der Erfindung ergeben sich nachfolgend aus dem erläuterten Ausführungsbeispiel. Dabei zeigen:
- Figur 1:: eine Querschnittsdarstellung einer Kaltgasspritzpistole mit einer Mischkammer, in die ein erfindungsgemäßer Pulverinjektor eingeführt ist;
- Figur 2a:: eine räumliche Darstellung des erfindungsgemäßen Pulverinjektors; und
- Figur 2b:: eine Querschnittsdarstellung des in Figur 2a dargestellten Pulverinjektors.

In der nun folgenden Beschreibung bezeichnen gleiche Bezugszeichen gleiche Bauteile bzw. gleiche Merkmale, so dass eine in Bezug auf eine Figur durchgeführte Beschreibung bzgl. eines Bauteils auch für die anderen Figuren gilt, so dass eine Wiederholung der Beschreibung vermieden wird.

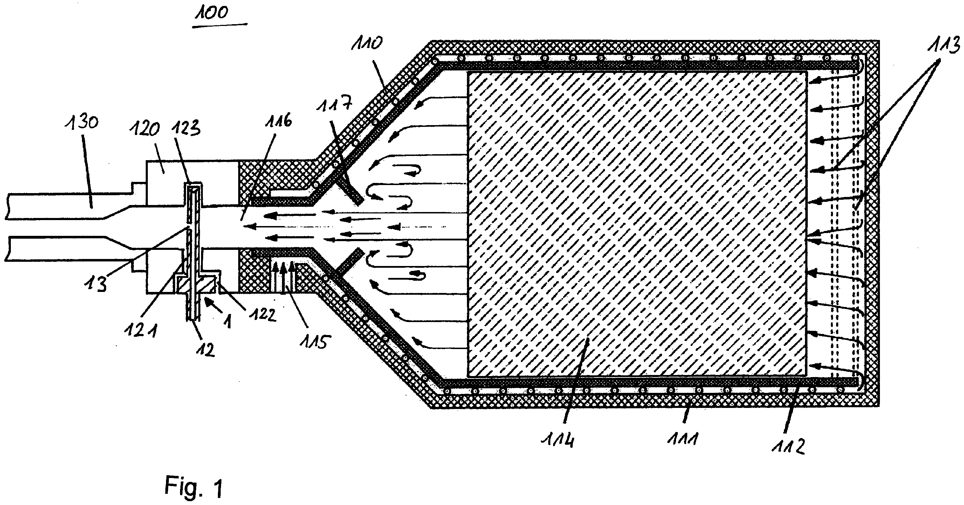

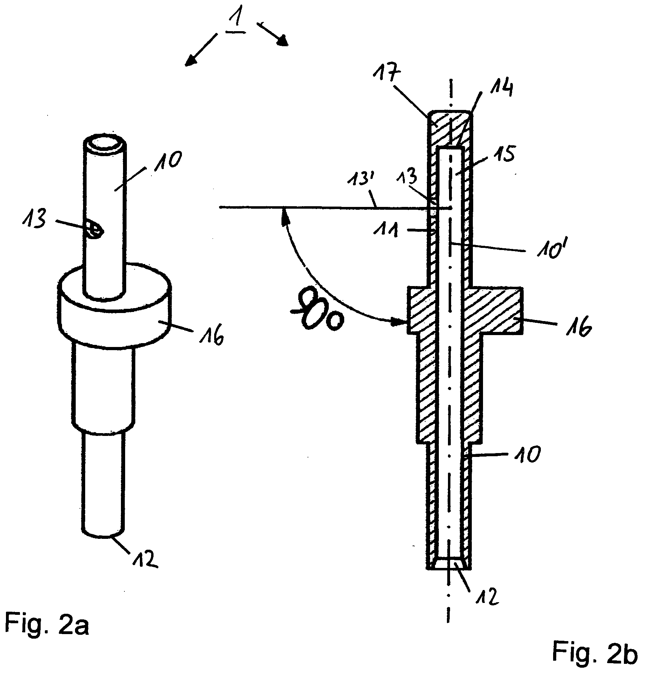

Figur 1 zeigt in einer Querschnittsdarstellung eine Kaltgasspritzpistole 100, die einen Hochdruckgaserhitzer 110, eine mit dem Hochdruckgaserhitzer 110 verbundene und diesem in Gasströmungsrichtung nachgelagerte Mischkammer 120 und eine mit der Mischkammer 120 verbundene und dieser in Gasströmungsrichtung nachgelagerte Düse 130 umfasst. Die Mischkammer 120 weist eine Öffnung 121 auf, über die ein Pulverinjektor 1 zum Injizieren eines Gas-Pulver-Gemisches in die Mischkammer 120 eingeführt werden kann. Ferner weist die Mischkammer eine erste radiale Ausnehmung 122 und eine zweite radiale Ausnehmung 123 auf, auf deren Funktion später mit Bezug auf die Figuren 2a und 2b noch eingegangen wird.

Dem Hochdruckgaserhitzer 110 wird ein Prozessgas über einen Gaseinlass 115 zugeführt. Der Gaseinlass 115 steht mit einem Spalt zwischen einem Heizmantel 112 und einem Druckbehälter 111 in Fluidverbindung. Das durch diesen Spalt hindurch strömende Prozessgas wird durch den Heizmantel vorgeheizt und tritt an einem Spaltende aus dem Spalt aus und trifft auf einen Druckbehälterdeckel, der einem Gasauslass 116 des Hochdruckgaserhitzers 110 gegenüberliegend angeordnet ist. Der Druckbehälterdeckel bewirkt ein Umleiten des Gasstroms in Richtung des Gasauslasses 116. Das vorgeheizte Prozessgas durchströmt zwei Gasleitbleche 113, die den Gasstrom weiter kanalisieren. Anschließend durchströmt das vorgeheizte Prozessgas eine Heizeinrichtung 114, die beispielsweise in Form von parallel zueinander angeordneten Heizröhren ausgebildet sein kann. Nach Durchströmen der Heizeinrichtung 114 strömt das Prozessgas einen Staukegel 117 an, der eine Verwirbelung des Prozessgases und somit eine Homogenisierung der Temperatur des Prozessgases bewirkt. Anschließend tritt das Prozessgas aus dem Gasauslass 116 aus dem Hochdruckgaserhitzer 110 aus und strömt in die Mischkammer 120.

Der Pulverinjektor 1 ist in die Mischkammer 120 eingeschoben und mit dieser verbunden, so dass ein aus dem Pulverinjektor 1 austretendes Gas-Pulver-Gemisch durch den Gasstrom in der Mischkammer 120 beschleunigt wird. Das Gas-Pulver-Gemisch durchströmt anschließend eine Düse 130, die beispielsweise als eine Lavaldüse 130 ausgestaltet sein kann, wodurch das Gas-Pulver-Gemisch weiter beschleunigt wird.

Im Folgenden wird mit Bezug auf die Figuren 2a und 2b der Aufbau des erfindungsgemäßen Pulverinjektors 1 beschrieben. Der Pulverinjektor 1 umfasst ein Pulverinjektorrohr 10, das eine Längsachse 10' aufweist. Das Pulverinjektorrohr 10 weist eine Zuführöffnung 12 zum Zuführen des Gas-Pulver-Gemisches in den Pulverinjektor 1 und eine Ausgabeöffnung 13 zum Ausgeben des Gas-Pulver-Gemisches aus dem Pulverinjektor 1 auf. Das Pulverinjektorrohr 10 ist an einem in den Figuren 2a und 2b oben dargestellten stirnseitigen Ende 14 verschlossen. Bei dem in den Figuren 2a und 2b dargestellten Pulverinjektor 1 ist das Pulverinjektorrohr 10 durch eine Sackbohrung im Pulverinjektor 1 realisiert. Alternativ kann das Pulverinjektorrohr 10 auch am stirnseitigen Ende 14 mit einem Stopfen oder mit einer beliebigen Wand verschlossen sein. Die Ausgabeöffnung 13 ist eine Öffnung in einer Seitenwand 11 des Pulverinjektorrohres 10. Aus Figur 2b ist ersichtlich, dass die Ausgabeöffnung 13 in den Hohlraum des Pulverinjektorrohres 10 mündet. Dabei mündet die Ausgabeöffnung 13 in einem axialen Abstand zum verschlossenen stirnseitigen Ende 14 des Pulverinjektorrohres 10, so dass zwischen der Ausgabeöffnung 13 und dem verschlossenen stirnseitigen Ende 14 des Pulverinjektorrohres 10 ein Stauvolumen 15 gebildet ist.

Durch Bereitstellen des Stauvolumens 15 tritt das im Pulverinjektorrohr 10 befindliche Gas-Pulver-Gemisch unter einem Winkel von 90° zur Längsachse 10' des Pulverinjektorrohrs 10 aus dem Pulverinjektorrohr aus. Weiterhin reduziert die Bereitstellung des Stauvolumens 15 die Streuung des aus der Ausgabeöffnung 13 heraustretenden Gas-Pulver-Gemisches.

Aus den Figuren 2a und 2b ist ersichtlich, dass der Pulverinjektor 1 ferner ein Befestigungselement 16 in Form einer Befestigungsscheibe 16 aufweist. Das Befestigungselement 16 weist einen kreissymmetrischen Querschnitt auf. Ferner ist die Längsachse des Befestigungselements 16 exzentrisch zur Längsachse 10' des Pulverinjektorrohres 10 ausgerichtet. In der in den Figuren 2a und 2b dargestellten Ausführungsform ist das Befestigungselement 16 stoffschlüssig mit dem Pulverinjektorrohr 10 ausgebildet.

Der Pulverinjektor 1 umfasst ferner einen Führungs- und/ oder Anschlagabschnitt 17, der der Zuführöffnung 12 gegenüberstehend angeordnet ist.

Das Befestigungselement 16 und der Führungs- und/oder Anschlagabschnitt 17 dienen der genauen Positionierung des Pulverinjektors 1. Aus Figur 1 ist ersichtlich, dass die Mischkammer 120 eine erste radiale Ausnehmung 122 und eine zweite radiale Ausnehmung 123 aufweist. Der Pulverinjektor 1 ist über die Öffnung 121 in die Mischkammer 120 eingeführt. Die erste radiale Ausnehmung 122 weist eine derartige kreissymmetrische Querschnittsform auf, dass das Befestigungselement 16 in der ersten radialen Ausnehmung 122 aufnehmbar ist. Die zweite radiale Ausnehmung 123 ist derart ausgestaltet, dass diese den Führungs- und/oder Anschlagabschnitt 17 des Pulverinjektors 1 aufnehmen kann. Die Längsachse der ersten radialen Ausnehmung 122 ist exzentrisch zur Längsachse der zweiten radialen Ausnehmung 123 ausgerichtet, so dass der Pulverinjektor 1 nur bei einer einzigen vorgegebenen Winkelstellung in die Mischkammer 120 derart einführbar ist, dass gleichzeitig das Befestigungselement 16 in der ersten radialen Ausnehmung 122 und der Führungs- und/oder Anschlagabschnitt 117 in der zweiten radialen Ausnehmung 123 aufgenommen ist.

Dadurch kann gewährleistet werden, dass die Ausgabeöffnung 13 genau entlang der Längsachse der Mischkammer 120 angeordnet ist, wodurch die Pulverpartikel in das Zentrum des Prozessgasstromes ausgegeben werden können. Weiterhin kann durch die genaue Positionierung des Pulverinjektors 1 gewährleistet werden, dass die Ausgabeöffnung 13 der Düsenmitte gegenüber steht, so dass die Pulverpartikel in die Mitte der Düse 130 ausgegeben werden. Dadurch wird die Abrasion sowohl der Ausgabeöffnung 13 als auch der Düse 130 in deren Eingangsbereich erheblich vermindert.

### Bezugszeichenliste:

- 1: Pulverinjektor / Partikelzuführungseinrichtung
- 10: Pulverinjektorrohr
- 10': Längsachse (des Pulverinjektorrohres)
- 11: Seitenwand (des Pulverinjektorrohres)
- 12: Zuführöffnung (des Pulverinjektorrohres)
- 13: Ausgabeöffnung (des Pulverinjektorrohres)
- 13': Ausgabeöffnungachse
- 14: stirnseitig verschlossenes Ende (des Pulverinjektorrohres)
- 15: Stauvolumen (des Pulverinjektorrohres)
- 16: Befestigungselement (des Pulverinjektors)
- 17: Führungs- und/oder Anschlagsabschnitt (des Pulverinjektors)
- 100: Kaltgasspritzpistole
- 110: Hochdruckgaserhitzer
- 111: Druckbehälter
- 112: Heizmantel
- 113: Gasleitblech
- 114: Heizeinrichtung
- 115: Gaseinlass
- 116: Gasauslass
- 120: Mischkammer
- 121: Öffnung (in Mischkammer)
- 122: erste radiale Ausnehmung (in der Mischkammer)
- 123: zweite radiale Ausnehmung (in der Mischkammer)
- 130: Düse

## Patentansprüche

1. Kaltgasspritzpistole mit einer von einem Prozessgas durchströmten Mischkammer (120) und einem Pulverinjektor (1) zum Injizieren eines Gas-Pulver-Gemisches in die Mischkammer (120), wobei der Pulverinjektor (1) ein Pulverinjektorrohr (10) mit einer Zuführöffnung (12) zum Zuführen des Gas-Pulver-Gemisches in den Pulverinjektor (1) und eine Ausgabeöffnung (13) zum Ausgeben des Gas-Pulver-Gemisches aus dem Pulverinjektor (1) aufweist, **gekennzeichnet durch** die folgenden Merkmale:
- das Pulverinjektorrohr (10) ist an einem stirnseitigen Ende (14) verschlossen;
- die Ausgabeöffnung (13) ist als Öffnung in einer Seitenwand (11) des Pulverinjektorrohres (10) ausgebildet; und
- die Ausgabeöffnung (13) mündet in den Hohlraum des Pulverinjektorrohres (10) in einem axialen Abstand zum verschlossenen stirnseitigen Ende (14) des Pulverinjektorrohres (10), so dass zwischen der Ausgabeöffnung (13) und dem verschlossenen stirnseitigen Ende (14) des Pulverinjektorrohres (10) ein Stauvolumen (15) angeordnet ist.

2. Kaltgasspritzpistole nach Anspruch 1, **dadurch gekennzeichnet, dass** die Ausgabeöffnung (13) des Pulverinjektorrohres (10) eine Ausgabeöffnungsachse (13') aufweist, die mit einer Längsachse (10') des Pulverinjektorrohres (10) einen Winkel zwischen 60° und 120°, insbesondere 90°, einschließt.

3. Kaltgasspritzpistole nach einem der vorhergehenden Ansprüche, **gekennzeichnet durch** die folgenden Merkmale:
- der Pulverinjektor (1) umfasst ferner ein an dessen Außenseite angeordnetes Befestigungselement (16) mit kreissymmetrischem Querschnitt, mittels dem der Pulverinjektor (1) an der Kaltgasspritzpistole (100) befestigbar ist;
- der Pulverinjektor (1) umfasst ferner einen der Zuführöffnung (12) gegenüberstehenden Führungs- und/oder Anschlagsabschnitt (17); und
- eine Längsachse des Befestigungselements (16) ist exzentrisch zu einer Längsachse des Führungs- und/oder Anschlagabschnitts (17) ausgerichtet.

4. Kaltgasspritzpistole nach einem der vorhergehenden Ansprüche, **dadurch gekennzeichnet,**
- **dass** die Mischkammer (120) in Gasströmungsrichtung einem Hochdruckgaserhitzer (110) nachgelagert ist, und
- **dass** eine mit der Mischkammer (120) verbundene und dieser in Gasströmungsrichtung nachgelagerte Düse (130) vorgesehen ist.

## Claims

1. Cold-gas spray gun comprising a mixing chamber (120), through which a process gas flows, and a powder injector (1) for injecting a gas-powder mixture into the mixing chamber (120), the powder injector (1) having a powder injector tube (10) comprising a feed opening (12) for feeding the gas-powder mixture into the powder injector (1) and a discharge opening (13) for discharging the gas-powder mixture from the powder injector (1), **characterised by** the following features:
- the powder injector tube (10) is closed at one end-face end (14),
- the discharge opening (13) is formed as an opening in a side wall (11) of the powder injector tube (10); and
- the discharge opening (13) opens into the cavity of the powder injector tube (10) at an axial distance from the closed end-face end (14) of the powder injector tube (10), so that a backed-up volume (15) is arranged between the discharge opening (13) and the closed end-face end (14) of the powder injector tube (10).

2. Cold-gas spray gun according to claim 1, **characterised in that** the discharge opening (13) of the powder injector tube (10) has a discharge opening axis (13') which encloses an angle of between 60° and 120°, in particular of 90°, with a longitudinal axis (10') of the powder injector tube (10).

3. Cold-gas spray gun according to either of the preceding claims, **characterised by** the following features:
- the powder injector (1) further comprises a fixing element (16) which is arranged on the outside thereof, has a circular cross section and by means of which the powder injector (1) can be fixed to the cold-gas spray gun (100);
- the powder injector (1) further comprises a guide and/or stop portion (17) opposite the feed opening (12); and
- a longitudinal axis of the fixing element (16) is oriented eccentrically to a longitudinal axis of the guide and/or stop portion (17).

4. Cold-gas spray gun according to any of the preceding claims, **characterised in that** the mixing chamber (120) is arranged downstream of a high-pressure gas heater (110) in the gas flow direction, and **in that** a nozzle (130) is provided which is connected to the mixing chamber (120) and is arranged downstream thereof in the gas flow direction.

## Revendications

1. Pistolet de projection à gaz froid comportant une chambre de mélange (120) traversée par un écoulement d'un gaz de process, et un injecteur à poudre (1) pour injecter un mélange gaz-poudre dans la chambre de mélange (120), dans lequel l'injecteur à poudre (1) comprend un tube injecteur de poudre (10) avec une ouverture d'alimentation (12) pour l'alimentation du mélange gaz-poudre dans l'injecteur à poudre (1) et une ouverture de distribution (13) pour la distribution du mélange gaz-poudre hors de l'injecteur à poudre (1), **caractérisé par** les caractéristiques suivantes :
- le tube injecteur de poudre (10) est obturé à une extrémité du côté frontal (14);
- l'ouverture de distribution (13) est réalisée sous forme d'ouverture dans une paroi latérale (11) du tube injecteur de poudre (10); et
- l'ouverture de distribution (13) débouche dans la cavité du tube injecteur de poudre (10) à une distance axiale de l'extrémité obturée du côté frontal (14) du tube injecteur de poudre (10), de sorte qu'un volume d'accumulation (15) est agencé entre l'ouverture de distribution (13) et l'extrémité obturée du côté frontal (14) du tube injecteur de poudre (10).

2. Pistolet de projection à gaz froid selon la revendication 1, **caractérisé en ce que** l'ouverture de distribution (13) du tube injecteur de poudre (10) comporte un axe ouverture de distribution (13'), qui forme avec un axe longitudinal (10') du tube injecteur de poudre (10) un angle entre 60° et 120°, en particulier 90°.

3. Pistolet de projection à gaz froid selon l'une des revendications précédentes, **caractérisé par** les caractéristiques suivantes :
- l'injecteur à poudre (1) inclut en outre un élément de fixation (16) agencé sur son côté extérieur, avec une section à symétrie circulaire, au moyen duquel l'injecteur à poudre (1) est susceptible d'être fixé sur le pistolet de projection à gaz froid;
- l'injecteur à poudre (1) inclut en outre une portion de guidage et/ou de butée (17) située à l'opposé de l'ouverture d'alimentation (12) ; et
- un axe longitudinal de l'élément de fixation (16) est orienté de manière excentrée par rapport à un axe longitudinal de la portion de guidage et/ou de butée (17).

4. Pistolet de projection à gaz froid selon l'une des revendications précédentes, **caractérisé en ce que**
- la chambre de mélange (120) est située, dans la direction d'écoulement du gaz, après un dispositif de chauffage de gaz à haute pression (110), et
- il est prévu une buse (130) reliée à la chambre de mélange (120) et située après celle-ci dans la direction d'écoulement du gaz.
